Europäisches Patentamt

European Patent Office

Office européen des brevets

(11) Veröffentlichungsnummer: **0 459 275 A2**

(12) **EUROPÄISCHE PATENTANMELDUNG**

(21) Anmeldenummer: **91108194.1**

(51) Int. Cl.5: **H04N 5/76**

(22) Anmeldetag: **21.05.91**

(30) Priorität: **28.05.90 DE 4017174**

(43) Veröffentlichungstag der Anmeldung:
**04.12.91 Patentblatt 91/49**

(84) Benannte Vertragsstaaten:
**AT BE CH DE DK ES FR GB GR IT LI LU NL SE**

(71) Anmelder: **DEUTSCHE THOMSON-BRANDT GMBH**

**W-7730 Villingen-Schwenningen(DE)**

(72) Erfinder: **Neiss, Volker, Dipl.-Ing.**
**Weiherstrasse 9**
**W-7730 VS-Villingen(DE)**
Erfinder: **Koblitz, Rudolf, Dr.-Ing.**
**J.J. Rieggerstrasse 12a**
**W-7730 VS-Villingen(DE)**

(74) Vertreter: **Einsel, Robert, Dipl.-Ing.**
**Deutsche Thomson-Brandt GmbH Patent-
und Lizenzabteilung Göttinger Chaussee 76**
**W-3000 Hannover 91(DE)**

(54) **Erkennungsschaltung für ein Videorecorder-Signal.**

(57)
2.1. Bei der Verarbeitung eines Signals von einem Videorecorder sind bestimmte Umschaltungen zweckmäßig, z.B. eine Umschaltung der Regelgeschwindigkeit der PLL der Zeilenablenkschaltung. Aufgabe ist es, eine einfache Schaltung zu schaffen, die aus dem Signal selbst den Recorder-Betrieb erkennen kann.

2.2. Die Schaltspannung wird aus der gegenüber dem genormten Sendersignal abweichenden Lage des Vertikalsynchronimpulses (V) relativ zu den Zeilenperioden gewonnen.

2.3. Insbesondere für Videorecorder und Fernsehempfänger

FIG.1

EP 0 459 275 A2

Die Erfindung geht aus von einer Schaltung gemäß dem Oberbegriff des Anspruchs 1.

Es gibt Geräte wie z.B. Fernsehempfänger und Monitore, die wahlweise ein Fernsehsignal von einem Fernsehsender oder ein Fernsehsignal von einem Videorecorder verarbeiten. Dabei ist es zweckmäßig oder notwendig, bei der Verarbeitung des Signals eines Videorecorders Umschaltungen vorzunehmen. Es ist bekannt, bei einem Signal von einem Videorecorder die Regelgeschwindigkeit der PLL der Zeilenablenkschaltung zu vergrößern, weil die Zeilenfrequenz eines Signals von einem Recorder im Gegensatz zu dem Signal von einem Sender Schwankungen aufweist, denen die Zeilenablenkung folgen muß.

Es ist bekannt, in einem Fernsehempfänger für die Verarbeitung des Signals von einem Videorecorder bestimmte Programmplätze zu reservieren. Dann kann das Signal des Videorecorders jedoch nur mit diesem Programmplatz optimal verarbeitet werden. Bei Empfang des Signals eines Fernsehsenders mit diesem Programmplatz wäre die vorgenommene Umschaltung indessen nachteilig.

Der Erfindung liegt die Aufgabe zugrunde, eine besonders einfache, sicher arbeitende Schaltung zur Erkennung des Signals eines Videorecorders zu schaffen.

Diese Aufgabe wird durch die im Anspruch 1 angegebene Erfindung gelöst. Vorteilhafte Weiterbildungen der Erfindung sind in den Unteransprüchen angegeben.

Bei der erfindungsgemäßen Lösung wird ein spezieller Signalparameter, der nur bei dem Signal eines Videorecorders auftritt, in vorteilhafter Weise zusätzlich für die Erzeugung des Schaltpegels ausgenutzt Die Lösung arbeitet unabhängig von einem Programmplatz, da die Umschaltung nicht in einem Programmplatz programmiert ist, sondern durch das Signal selbst ausgelöst wird. Die Erfindung benötigt nur einen geringen Schaltungsaufwand in Form einer logischen Schaltung, die keinen kritischen Abgleich erfordert.

Die Erfindung wird anhand der Zeichnung an einem Ausführungs beispiel erläutert. Darin zeigen

Fig. 1    ein Blockschaltbild für die erfindungsgemäße Lösung und

Fig. 2    Diagramme zur Erläuterung der Wirkungsweise der Schaltung nach Fig. 1.

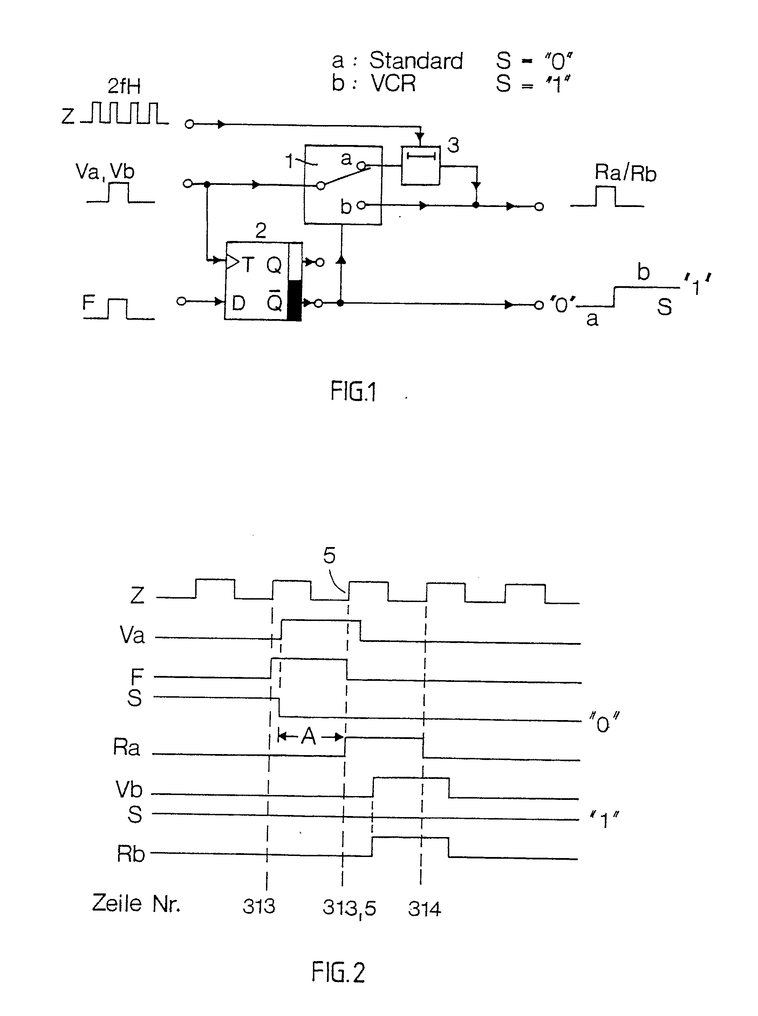

Fig. 1 zeigt eine Taktimpulsfolge Z mit der doppelten Zeilenfrequenz 2fH, den Vertikalsynchronimpuls V, den eine bestimmte Zeile markierenden Fensterimpuls F, den Vertikalrücklauf impuls R, den zwischen den beiden Betriebsarten umschaltenden Schaltpegel S, den Umschalter 1, das positiv flankengetriggerte D-Flip-Flop 2 und die Verzögerungsstufe 3. Der Impuls V ist an den Takteingang T und der Impuls F an den Dateneingang D des Flip-Flop 2 angelegt. Im folgenden werden zwei verschiedene Betriebsarten unterschieden, und zwar

1.Standardbetrieb

Darunter werden verstanden der Empfang des Signals eines Fernsehsenders und auch der Normalbetrieb eines Videorecorders, also der Wiedegabebetrieb mit Normalgeschwindigkeit.

2. Recorderbetrieb

Darunter wird verstanden der vom Normalbetrieb abweichende Betrieb des Recorders, nämlich Standbildbetrieb und schneller Bildsuchlauf in beiden Richtungen.

Die Wirkungsweise der Schaltung wird anhand der Fig. 2 nacheinander für diese beiden Betriebsarten beschrieben.

Standardbetrieb

Bei Standardbetrieb hat der Vertikalsynchronimpuls Va eine definierte Lage zu den Zeilenperioden. In Fig. 2 ist angenommen, daß der Impuls Va kurz nach Beginn der Zeile 313 beginnt. Der Impuls F markiert die Zeile 313 und erstreckt sich über die halbe Dauer dieser Zeile, also von 313 bis 313,5. Mit Beginn von Va liegen somit beide Eingänge des Flip-Flop 2 auf "1", so daß das Flip-Flop 2 ausgelöst wird und der Ausgang Q auf "1" geht. Der Schaltpegel S wird vom negierten Ausgang $\overline{Q}$ abgenommen und nimmt daher den Wert "O" an. Dieser Zustand wird durch das Flip-Flop 2 gehalten bis zur nächsten Änderung des Zustandes. Der Schaltpegel S mit dem Wert "O" nimmt die nur bei Recorderbetrieb notwendigen Umschaltungen nicht vor. Der Schaltpegel S betätigt den Schalter 1 nicht, der somit in der Stellung "a" verbleibt. Der Vertikalsynchronimpuls Va gelangt auf die Verzögerungsstufe 3. Die Stufe 3 erzeugt den Vertikalrücklaufimpuls Ra erst bei der ersten positiven Flanke 5 von Z nach dem Auftreten von Va mit einer Verzögerung A gegenüber dem Beginn von Va. Diese Synchronisierung des Vertikalrücklaufimpulses Ra durch Z ist vorteilhaft für die Ansteuerung und Synchronisierung weiterer Stufen. Sie ist insbesondere wichtig, um bei der Wiedergabe einen einwandfreien Zeilensprung, auch interlace genannt, sicherzustellen.

Recorderbetrieb

Bei Recorderbetrieb hat der Vertikalsynchronimpuls Vb keine definierte Lage mehr zu den Zeilenperioden. Er kann um eine oder sogar mehrere Zeilen früher oder später liegen als beim Standardbetrieb. In Fig. 2 ist angenommen, daß der Impuls Vb erst während der zweiten Hälfte der Zeile 313 beginnt. Im allgemeinen wird die Abweichung von der Lage des Impulses Va größer sein. Der Impuls Vb und der gegenüber Standardbetrieb unveränderte Fensterimpuls F fallen nicht mehr zeitlich zusammen. Das Flip-Flop 2 wird daher nicht mehr ausgelöst, so daß der Ausgang $\overline{Q}$ auf "1" geht und demzufolge der Schaltpegel S den Wert "1" annimmt. Der Schaltpegel S mit dem Wert "1" bewirkt die bei Recorderbetrieb gewünschte Umschaltung im Fernsehempfänger oder sonstigen angeschlossenen Schaltungen. Der Schaltpegel S schaltet außerdem den Schalter 1 in die Stellung b um. Der Vertikalrücklaufimpuls Rb beginnt jetzt unverzögert mit Beginn des Vertikalsynchronimpulses Vb. Bei dieser Betriebsart ist ein unverzögerter Vertikalrücklauf vorteilhafter, da sonst der Zeilensprung gestört werden und eine sogenannte Paarigkeit der Zeilen bei Standbildbetrieb auftreten kann.

Die Vorgänge wurden für die Zeile 313 beschrieben. Der beschriebene Vorgang findet jeweils zu Beginn eines Halbbildes, also in der Vertikalrücklaufzeit statt. Der jeweils gewonnene Schaltpegel S wird bis zum nächsten Auswertvorgang gemäß Fig. 2 aufrechterhalten. Der Fensterimpuls F liegt während der Zeile 0,5 und 313 bei einem Fernsehsystem mit einer Vertikalfrequenz von 50 Hz oder während der Zeile 0,5 und 263 bei einem Fernsehsystem mit einer Vertikalfrequenz von 60 Hz. Der Schaltpegel S dient vorzugsweise dazu, bei Recorderbetrieb die Regelgeschwindigkeit der PLL der Zeilenablenkung zu erhöhen, z.B. durch Verringerung einer im Weg der Regelspannung liegenden Zeitkonstante.

**Patentansprüche**

1. Erkennungsschaltung für ein Videorecorder-Signal, bei der aus dem Videosignal ein den Recorderbetrieb anzeigender Schaltpegel für die Betätigung von Umschaltungen gewonnen wird, **dadurch gekennzeichnet**, daß der Schaltpegel (S) aus der gegenüber dem genormten Sendersignal abweichenden zeitlichen Lage des Vertikalsynchronimpulses (V) relativ zu den Zeilenperioden gewonnen wird.

2. Schaltung nach Anspruch 1, **dadurch gekennzeichnet**, daß ein eine bestimmte Zeile markierender Fensterimpuls (F) und der Vertikalsynchronimpuls (V) an die Eingänge einer logischen Schaltung (2) angelegt sind, deren Ausgangsspannung als Schaltpegel (S) dient.

3. Schaltung nach Anspruch 1, **dadurch gekennzeichnet**, daß die logische Schaltung ein positiv flankengetriggertes D-Flip-Flop (2) enthält, an dessen Takteingang (T) der Vertikalsynchronimpuls (V) und an dessen Dateneingang (D) der Fensterimpuls (F) angelegt ist.

4. Schaltung nach Anspruch 1, **dadurch gekennzeichnet**, daß der Fensterimpuls (F) während der halben Dauer einer Zeile (Nr. 0,5;313) auftritt, in der bei einem Standard-Fernsehsignal auch der Vertikalsynchronimpuls (V) vorhanden ist.

5. Schaltung nach Anspruch 1, **dadurch gekennzeichnet**, daß der Schaltpegel (S) zur Anzeige des Recorderbetriebs dient.

6. Schaltung nach Anspruch 1, **dadurch gekennzeichnet**, daß der Schaltpegel (S) zur Umschaltung der Regelgeschwindigkeit der PLL-Synchronisierung für die Zeilenablenkung dient.

7. Schaltung nach Anspruch 1, **dadurch gekennzeichnet**, daß die Erhöhung der Regelgeschwindigkeit nur während der Vertikalrücklaufzeit erfolgt.

8. Schaltung nach Anspruch 1, **dadurch gekennzeichnet**, daß der Schaltpegel (S) bei Recorderbetrieb zur Abschaltung einer bei Standardbetrieb wirksamen Verzögerung (D) zwischen dem Vertikalsynchronimpuls (V) und dem daraus abgeleiteten Vertikalrücklaufimpuls (R) dient.

FIG.1

FIG.2